(19) 

Europäisches Patentamt

European Patent Office

Office européen des brevets

(11) **EP 4 600 024 A1**

(12) **EUROPEAN PATENT APPLICATION**

(43) Date of publication:
**13.08.2025 Bulletin 2025/33**

(21) Application number: **24156929.2**

(22) Date of filing: **09.02.2024**

(51) International Patent Classification (IPC):
**B29C 65/34** (2006.01)      **B29K 105/06** (2006.01)
**B29K 307/04** (2006.01)      **B29L 31/30** (2006.01)

(52) Cooperative Patent Classification (CPC):
(C-Sets available)
**B29C 66/83221; B29C 65/34; B29C 66/721;**
**B29C 66/7212; B29C 66/73141; B29C 66/81455;**
B29C 65/3432; B29C 65/344; B29C 65/3476;
B29L 2031/3076      (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Airbus Operations GmbH
21129 Hamburg (DE)**

(72) Inventors:
• **Vichniakov, Alexei
  Hamburg (DE)**
• **Vichniakov, Viktor
  Hamburg (DE)**

(54) **METHOD FOR JOINING TWO PARTS BY MEANS OF ELECTRIC RESISTANCE WELDING**

(57)      A method for joining two parts (12, 12a, 12b) by means of electric resistance welding, the method comprising:

a) Providing a layer structure (14) for electric resistance welding, the layer structure (14) including:
- two parts (12, 12a, 12b) to be joined, wherein at least one of the parts (12, 12a, 12b) is electrically conductive,
- an electrically conductive heating component (16) arranged between the two parts (12, 12a, 12b), and
- an electrically insulating component (28) arranged between the heating component (16) and the at least one electrically conductive part (12, 12a, 12b), the insulating component (28) comprising one or more basalt fibers (30); and

b) Causing an electric current to flow through the heating component (16) for electric resistance welding of the layer structure (14) along a weld joint surface (26) of the layer structure (14) and thus joining the two parts (12, 12a, 12b).

Fig. 2

**(Cont. next page)**

(52) Cooperative Patent Classification (CPC): (Cont.)

C-Sets
**B29C 66/7212, B29K 2307/04;**
B29C 66/7212, B29K 2277/10;
B29C 66/7212, B29K 2309/08

**Description**

The invention relates to a method for joining two or more parts by means of electric resistance welding. The invention further relates to an arrangement for joining two or more parts by means of electric resistance welding.

In order to reduce energy or fuel consumption of vehicles, such as aircraft, lightweight construction is more and more a preferred choice. In lightweight construction, heavy parts are replaced, for example, by composites. A composite is a material which is produced from two or more constituent materials. Examples for such material are reinforced plastics, such as fiber-reinforced polymers.

In order to join two or more parts together, welding is a well-known technique. Welding may be achieved, for example, by electric resistance welding. However, welding of composite materials, especially with carbon fibers, may lead to a leakage of current due to the electrical conductivity of the carbon fibers.

The object of the invention is to provide an improved method for joining two parts by means of electrical resistance welding.

To achieve this object, the invention provides a method for joining two or more parts by means of electric resistance welding according to claim 1. An arrangement for joining two or more parts by means of electric resistance welding is subject-matter of the parallel claim.

Advantageous embodiments of the invention are subject-matter of the dependent claims.

In one aspect, the invention provides a method for joining two or more parts by means of electric resistance welding, the method comprising:

a) Providing a layer structure for electric resistance welding, the layer structure including:

- two parts to be joined, wherein at least one of the parts is electrically conductive,
- an electrically conductive heating component arranged between the two parts, and
- an electrically insulating component arranged between the heating component and the at least one electrically conductive part, the insulating component comprising one or more basalt fibers; and

b) Causing an electric current to flow through the heating component for electric resistance heating by welding of the layer structure along a weld joint surface of the layer structure and thus joining the two parts.

Preferably, the method further comprises:
c) Applying a pressure onto the layer structure orthogonal and/or normal to the weld joint surface during electric resistance welding.

Preferably, the one or more basalt fibers are configured for preventing of current leakages.

Preferably, one, several, or all of the following applies:

d1) Young's modulus of the one or more basalt fibers is above 50 GPa, preferably in the range from 90 to 120 GPa;
d2) the one or more basalt fibers comprise 35-55 % w/w $SiO_2$, preferably 47-50 % w/w $SiO_2$;
d3) the one or more basalt fibers comprise 10-25 % w/w $Al_2O_3$, preferably 15-18 % w/w $Al_2O_3$;
d4) the one or more basalt fibers comprise 3-10 % w/w $MgO$, preferably 5-7 % w/w $MgO$; and/or
d5) the elongation at break of the one or more basalt fibers is in the range from 2 to 5 %.

Preferably, the heating component is made of metal and/or has a tensile strength above, i.e., of or more than 0,20 GPa.

Preferably, the insulating component comprises a basalt fiber-based textile, a basalt fiber-based fabric, a basalt fiber-based mesh, a basalt fiber-based mat, and/or a basalt fiber-based fleece.

Preferably, the insulating component comprises a composite, preferably a basalt fiber-reinforced material, more preferably a basalt fiber-reinforced polymer and/or thermoplastic.

Preferably, one or both of the following applies:

e1) the one or more basalt fibers constitute 35-75 % vol. of the composite; and/or
e2) the one or more basalt fibers are arranged in parallel in a matrix of the composite.

Preferably, at least one of the parts include a composite, preferably a fiber-reinforced material, more preferably a carbon, glass, basalt, and/or aramid fiber-reinforced material, the material being preferably a polymer and/or thermoplastic.

In another aspect, the invention provides an arrangement for joining two or more parts by means of electric resistance welding, the arrangement comprising a layer structure for electric resistance welding, the layer structure including:

- two parts to be joined, wherein at least one of the parts is electrically conductive,
- an electrically conductive heating component arranged between the two parts, and
- an electrically insulating component arranged between the heating component and the at least one electrically conductive part, the insulating component comprising one or more basalt fibers.

Preferably, the insulating component comprises basalt fiber-based textile, a basalt fiber-based fabric, a basalt fiber-based mesh, a basalt fiber-based mat, and/or a basalt fiber-based fleece.

Preferably, the arrangement further comprises a pressure application device for applying a pressure onto the layer structure orthogonal and/or normal to a weld joint surface.

Preferably, the arrangement further comprises an electric power device electrically connectable to the welding component for electric resistance welding of the layer structure.

Any features or advantages that are described with reference to one aspect of the invention may also be applied to another aspect of the invention.

Embodiments of the invention preferably have the following advantages and effects:

An idea of preferred embodiments of the invention is to provide an improved method for joining two or more parts by means of electrical resistance welding with technology and materials preventing the current leakage during the welding process.

In preferred embodiments of the invention, a "basalt fiber"-based component will be added as an additional layer around the welded composite parts to avoid a current leakage and therefore improve the usage of resistance welding for composite parts.

According to https://www.encyclopedia.com/earth-and-environment/geoloqy-and-oceanography/geology-and-oceanography/basalt basalt is a "dark-coloured, fine-grained, extrusive, igneous rock composed of plagioclase feldspar, pyroxene, and magnetite, with or without olivine, and containing not more than 53wt.% SiO2. Many basalts contain phenocrysts of olivine, plagio-clase feldspar and pyroxene. Basalts are divided into two main types, alkali basalts and tholeiites, with the tholeiites being subdivided into olivine tholeiites, tholeiites, and quartz tholeiites. Petrographically (see PETROGRAPHY), alkali basalts have as their groundmass pyroxene titanaugite (an augite rich in titanium), whereas tholeiites have pigeonite (a calcium-poor pyroxene). Also, for similar concentrations of SiO2, alkali basalts have a higher content of Na2O and K2O than tholeiites. Basalt flows cover about 70% of the Earth's surface and huge areas of the terrestrial planets, and are therefore arguably the most important of all crustal rocks. They are formed by partial melting of mantle peridotite. Alkali basalts are typically found on oceanic islands and on the continental crust in regions of crustal upwarping and rifting. Tholeiites are typically found on the ocean floor and on the stable continental crust where they form large basalt plateaux such as the Deccan Traps of India."

"Basalt fibers" are prepared from natural volcanic rock. Basalt, granite, diabase, amphibolite, diorite, trachyte, porphyry, and/or obsidian may be used as raw material. Herein, the term "basalt fibers" refers in general to volcanic rock-based fibers and in specific to basalt-based fibers, preferably having one, several, or all of the herein described properties.

Basalt fibers may be used in construction industry as thermal insulating material or for reinforcing concrete products. They may be used also in electronics industry for producing circuit boards. However, according to the inventors' knowledge, the usage of basalt fibers for reinforcing laminated materials has not been previously suggested.

The basalt fiber-based component preferably avoids a current leakage and therefore enable the usage of resistance welding for composite parts. This can preferably foster one, several, or all of the following aspects:

- Improved quality of welding result and potentially increased operating lifetime of parts;
- Reduced costs of rework due to failed welding processes;
- Usage of recycled thermoplastic material without additional fastening elements (reduced material variety and weight);
- Possible usage of bio-based composite materials; and
- Compatible with existing standard tools for resistance welding, such as a spot-welding gun.

Volcanic rock such as basalt is available at low costs. Furthermore, it advantageously has a broad range of working temperature and a high melting point. Volcanic rock and/or basalt has advantageous insulating properties. Additionally, it is a natural material that can be used for fiber production without further additives. Particularly basalt is a prevalent material and the most abundant volcanic rock on earth.

Basalt fibers advantageously involve a simple production process with reduced energy consumption. Furthermore, basalt fibers have a high chemical resistance and fire resistance. They advantageously have a potential for circular usage (i.e., reusing, recycling, etc.).

Embodiments of the invention are now explained in more detail with reference to the accompanying drawings of which

Fig. 1    shows a comparative arrangement for joining two parts by means of electric resistance welding;

Fig. 2    shows an arrangement for joining two parts means of electric resistance welding according to an embodiment of the invention; and

Fig. 3    shows the arrangement according to further embodiments of the invention.

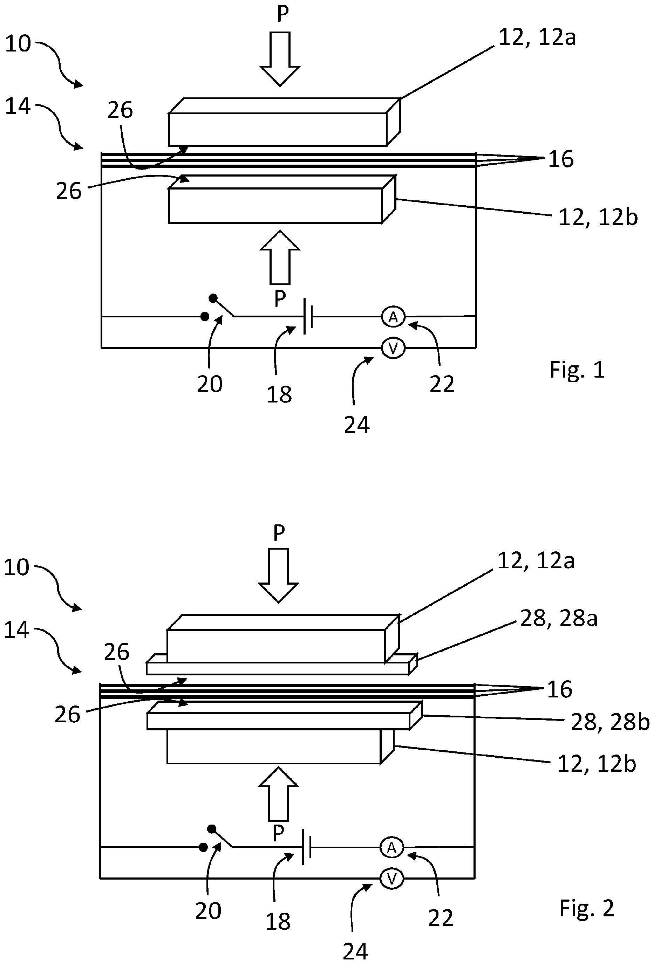

Fig. 1 shows a comparative arrangement 10 for joining two or more parts 12 by means of electric resistance welding.

The comparative arrangement 10 comprises comparative layer structure 14 for electric resistance welding.

The comparative layer structure 14 includes a first part 12a and a second part 12b to be joined. The first part 12a and/or the second part 12b may include a composite, preferably a fiber-reinforced material, more preferably a carbon, glass, basalt, and/or aramid fiber-reinforced material, such as polymer and/or thermoplastic.

The comparative layer structure 14 further includes an electrically conductive heating component 16 that is arranged between the first part 12a and the second part 12b. The heating component 16 may be made of metal. Additionally, or alternatively, the heating component 16 may have a tensile strength above 0,20 GPa.

The arrangement 10 further comprises an electric power device 18 electrically connectable to the heating component 16 for electric resistance welding of the comparative layer structure 14. The electric connection between the electric power device 18 and the heating component 16 may be established and interrupted via a switch 20.

For welding, an electric current is caused to flow through the heating component 16. The electric current may be controlled by monitoring the flow by means of an ammeter 22 and/or a voltmeter 24. The electric current leads to heating of the heating component 16. The heating leads to melting of the first part 12a, the second part 12b, and/or the heating component 16 along a weld joint surface 26 of the layer structure 14. During welding, a pressure P may be applied onto the comparative layer structure 14 orthogonal and/or normal to the weld joint surface 26. In this way, the first part 12a and the second part 12b may be joined together.

In general, during electric resistance welding, shunt or short circuits may arise depending on the two parts 12, 12a, 12b to be joined. Particularly, if at least one of the parts 12, 12a, 12b is electrically conductive, shunt or short circuits via the electrically conductive part 12, 12a, 12b may lead to leakage of a portion of the electric current flowing through the heating component 16. This may also influence the quality of the weld joint. An idea of preferred embodiments of the invention is to avoid shunt or short circuits and to improve the quality of the weld joint.

Fig. 2 shows an arrangement 10 for joining the two or more parts 12, 12a, 12b by means of electric resistance welding according to an embodiment of the invention.

In the embodiment as shown in Fig. 2, the first part 12a and the second part 12b are electrically conductive. However, the invention also comprises embodiments with only one of the first part 12a and the second part 12b being electrically conductive.

The arrangement 10 includes the features of the comparative arrangement 10 as shown in Fig. 1. Additionally, the layer structure 14 includes two electrically insulating components 28. A first electrically insulating component 28a is arranged between the heating component 16 and the first part 12a. A second electrically insulating component 26b is arranged between the heating component 16 and the second part 12b.

The electrically insulating components 28a, 28b comprise each one or more basalt fibers 30. The insulating components 28 may comprise basalt fibers 30 in form of a basalt fiber-based textile, a basalt fiber-based fabric, a basalt fiber-based mesh, a basalt fiber-based mat, and/or a basalt fiber-based fleece. The insulating components 28 may also comprise a composite, preferably a basalt fiber-reinforced material, such as a basalt fiber-reinforced polymer and/or thermoplastic.

The following Table I shows a comparison of properties of basalt fibers 30 with fibers of other materials (see: Chowdhury, I.R.; Pemberton, R.; Summerscales, J. Developments and Industrial Applications of Basalt Fibre Reinforced Composite Materials. J. Compos. Sci. 2022, 6, 367. https://doi.orq/10.3390/ics6120367.):

Table I

| Parameter | Fiber material | | | | |
|---|---|---|---|---|---|
| | Basalt | Carbon | E-glass | S-glass | Aramid |
| Density in $\frac{g}{cm^3}$ | 2,80-3,00 | 1,75-1,90 | 2,50-2,60 | 2,46-2,50 | 1,44 |
| Tensile strength in $MPa$ | 3000-4840 | 3500-6000 | 3100-3800 | 4590-4830 | 2900-3400 |

(continued)

| Parameter | Fiber material | | | | |
|---|---|---|---|---|---|
| | Basalt | Carbon | E-glass | S-glass | Aramid |
| Specific strength in $\frac{N \cdot m}{g}$ | 1000-1714 | 1842-3429 | 1192-1520 | 1836-1963 | 2014-2361 |
| Young's modulus in $GPa$ | 79,3-93,1 | 230-600 | 72,5-75,5 | 88,0-91,0 | 70,0-112 |
| Elongation at break % | 3,1 | 1,5-2,0 | 4,7 | 5,6 | 2,8-3,6 |
| Working temperature in °C | -200 to 700 | -50,0 to 700 | -50,0 to 380 | -50,0 to 300 | -196 to 427 |
| Price in $\frac{USD}{kg}$ | 2,5-3,5 | 30 | 0,75-1,2 | 5,0-7,0 | 25 |

The following Table II shows a selection of thermal properties of basalt fibers 30 (see: Chowdhury, I.R.; Pemberton, R.; Summerscales, J. Developments and Industrial Applications of Basalt Fibre Reinforced Composite Materials. J. Compos. Sci. 2022, 6, 367. https://doi.org/10.3390/jcs6120367; and http://www.minsocam.org/msa/collec tors corner/arc/tempmagmas.htm):

Table II

| Parameter | Value |
|---|---|
| Melting temperature in °C | 984-1260 |
| Working temperature range in °C | -200 to 700 |
| Thermal conductivity in $\frac{W}{m \cdot K}$ | 0,031-0,038 |
| Linear thermal expansion coefficient in $\frac{1}{10^6 K}$ | 8,00 |
| Specific heat capacity in $\frac{J}{kg \cdot K}$ | 0,340-1,26 |

The inventors found that some properties of basalt fibers 30 according to Table I and Table II and as mentioned herein are advantageous for a method for joining the two or more parts 12 by means of electric resistance welding. Advantages of basalt fibers 30 may be the high Young's modulus in the range from 90 to 120 GPa, the large working temperature range from -260 to +650°C, favorable properties at changing temperatures, good corrosion properties as well as a very good vibration resistance. Thus, basalt fibers 30 may be used in aircraft construction, for example, to produce bonded aluminium laminates.

The inventors further found that basalt fibers 30 that may be used for electric resistance welding, preferably comprise the one, several, or all of the following components:

Table III

| Component | % w/w | more preferred % w/w |
|---|---|---|
| $SiO_2$ | 35-55 | 47-50 |
| $TiO_2$ | 0-5 | 1-2 |
| $Al_2O_3$ | 10-25 | 15-18 |
| $Fe_2O_3$, FeO | 7-20 | 11-14 |
| MgO | 3-10 | 5-7 |
| CaO | 5-20 | 6-12 |
| $N_2O$ | 0-5 | 2-3 |

(continued)

| Component | % w/w | more preferred % w/w |
|-----------|-------|----------------------|
| $K_2O$ | 0-10 | 2-7 |

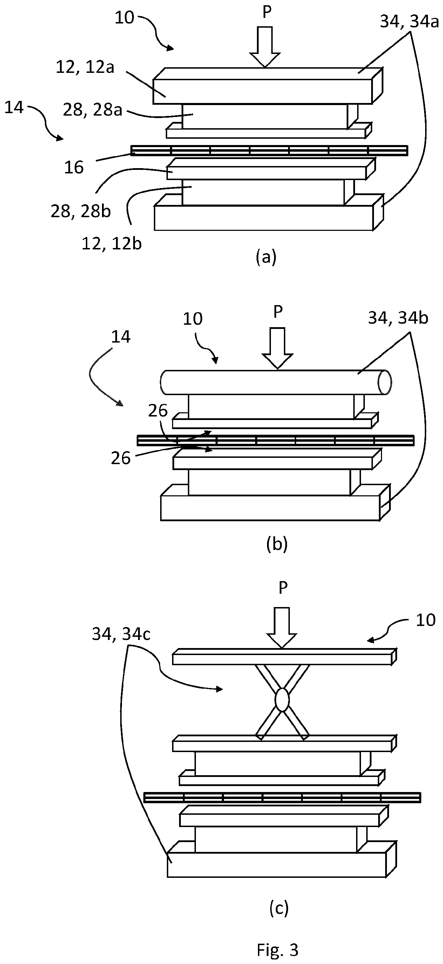

Fig. 3 shows the arrangement 10 according to further embodiments of the invention.

The arrangements 10 as shown in Fig. 3 (a), (b), and (c) comprise each a pressure application device 34 for applying the pressure P onto the layer structure 14 orthogonal and/or normal to the weld joint surface 26.

In Fig. 3 (a), the pressure application device 34 comprises a stamping device 34a for applying a stamping pressure onto the layer structure 14. In Fig. 3 (b), the pressure application device 34 comprises an air cushion device 34b for applying an air cushion pressure onto the layer structure 14. In Fig. 3 (c), the pressure application device 34 comprises a bent lever device 34c for applying a bent lever pressure onto the layer structure 14.

The invention also provides the method for joining the two or more parts 12 by means of electric resistance welding. The invention further provides a welded layer structure joining two or more parts 12, wherein the welded layer structure is obtainable by the method.

**List of reference signs:**

| | |
|---|---|
| 10 | arrangement |
| 12 | part |
| 12a | first part |
| 12b | second part |
| 14 | layer structure |
| 16 | heating component |
| 18 | electric power device |
| 20 | switch |
| 22 | ammeter |
| 24 | voltmeter |
| 26 | weld joint surface |
| 28 | insulating component |
| 28a | first insulating component |
| 28b | second insulating component |
| 30 | basalt fiber |
| 34 | pressure application device |
| 34a | stamping device |
| 34b | air cushion device |
| 34c | bent lever device |

P    pressure

**Claims**

**1.** A method for joining two parts (12, 12a, 12b) by means of electric resistance welding, the method comprising:

a) Providing a layer structure (14) for electric resistance welding, the layer structure (14) including:

- two parts (12, 12a, 12b) to be joined, wherein at least one of the parts (12, 12a, 12b) is electrically conductive,
- an electrically conductive heating component (16) arranged between the two parts (12, 12a, 12b), and
- an electrically insulating component (28) arranged between the heating component (16) and the at least one electrically conductive part (12, 12a, 12b), the insulating component (28) comprising one or more basalt fibers (30); and

b) Causing an electric current to flow through the heating component (16) for electric resistance welding of the layer structure (14) along a weld joint surface (26) of the layer structure (14) and thus joining the two parts (12, 12a, 12b).

2. The method according to claim 1, further comprising:
c) Applying a pressure (P) onto the layer structure (14) orthogonal and/or normal to the weld joint surface (26) during electric resistance welding.

3. The method according to any of the preceding claims, **characterized in** one, several, or all of the following:

d1) Young's modulus of the one or more basalt fibers (30) is above 50 GPa, preferably in the range from 90 to 120 GPa;
d2) the one or more basalt fibers (30) comprise 35-55 % w/w $SiO_2$, preferably 47-50 % w/w $SiO_2$;
d3) the one or more basalt fibers (30) comprise 10-25 % w/w $Al_2O_3$, preferably 15-18 % w/w $Al_2O_3$;
d4) the one or more basalt fibers (30) comprise 3-10 % w/w MgO, preferably 5-7 % w/w MgO; and/or
d5) the elongation at break of the one or more basalt fibers (30) is in the range from 2 to 5 %.

4. The method according to any of the preceding claims, **characterized in that** the heating component (16) is made of metal and/or has a tensile strength above 0,20 GPa.

5. The method according to any of the preceding claims, **characterized in that** the insulating component (28) comprises a basalt fiber-based textile, a basalt fiber-based fabric, a basalt fiber-based mesh, a basalt fiber-based mat, and/or a basalt fiber-based fleece.

6. The method according to any of the preceding claims, **characterized in that** the insulating component (28) comprises a composite, preferably a basalt fiber-reinforced material, more preferably a basalt fiber-reinforced polymer and/or thermoplastic.

7. The method according to claim 6, **characterized in that**:

e1) the one or more basalt fibers (30) constitute 35-75 % vol. of the composite; and/or
e2) the one or more basalt fibers (30) are arranged in parallel in a matrix of the composite.

8. The method according to any of the preceding claims, **characterized in that** at least one of the parts (12, 12a, 12b) include a composite, preferably a fiber-reinforced material, more preferably a carbon, glass, basalt, and/or aramid fiber-reinforced material, the material being preferably a polymer and/or thermoplastic.

9. An arrangement (10) for joining two parts (12, 12a, 12b) by means of electric resistance welding, the arrangement (10) comprising a layer structure (14) for electric resistance welding, the layer structure (14) including:

- two parts (12, 12a, 12b) to be joined, wherein at least one of the parts (12, 12a, 12b) is electrically conductive,
- an electrically conductive heating component (16) arranged between the two parts (12, 12a, 12b), and
- an electrically insulating component (28) arranged between the heating component (16) and the at least one electrically conductive part (12, 12a, 12b), the insulating component (28) comprising one or more basalt fibers (30).

10. The arrangement (10) according to claim 9, further comprising a pressure application device (34) for applying a pressure (P) onto the layer structure (14) orthogonal and/or normal to a weld joint surface (26) of the layer structure (14).

11. The arrangement (10) according to claim 9 or 10, further comprising an electric power device (18) electrically connectable to the welding component (16) for electric resistance welding of the layer structure (14).

Fig. 1

Fig. 2

Fig. 3

Europäisches
Patentamt

European
Patent Office

Office européen
des brevets

# EUROPEAN SEARCH REPORT

**Application Number**

EP 24 15 6929

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2024/025127 A1 (DUBREUIL LAURENT [FR]) 25 January 2024 (2024-01-25) * paragraphs [0007], [0020], [0082], [0087], [0088], [0099]; figures * | 1-11 | INV. B29C65/34 ADD. B29K105/06 B29K307/04 B29L31/30 |
| A | GB 2 525 614 A (TODS AEROSPACE LTD [GB]) 4 November 2015 (2015-11-04) * figures * * page 4, paragraphs 2,4 * * page 6, last paragraph * * page 9, lines 17-23 * * page 10, paragraph 2 * * page 11, paragraph 3 * * page 12, paragraph 1 * * claims 12,13,24, 25 * | 1-11 | |

**TECHNICAL FIELDS SEARCHED (IPC)**

B29C

The present search report has been drawn up for all claims

| Place of search | Date of completion of the search | Examiner |
|---|---|---|
| Munich | 30 July 2024 | Carré, Jérôme |

EPO FORM 1503 03.82 (P04C01)

## ANNEX TO THE EUROPEAN SEARCH REPORT
## ON EUROPEAN PATENT APPLICATION NO.

EP 24 15 6929

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2024

| Patent document cited in search report | Publication date | Patent family member(s) | Publication date |
|---|---|---|---|
| US 2024025127 A1 | 25-01-2024 | CA 3193859 A1 | 16-06-2022 |
| | | EP 4204216 A1 | 05-07-2023 |
| | | FR 3117400 A1 | 17-06-2022 |
| | | US 2024025127 A1 | 25-01-2024 |
| | | WO 2022122881 A1 | 16-06-2022 |
| GB 2525614 A | 04-11-2015 | EP 3137280 A1 | 08-03-2017 |
| | | GB 2525614 A | 04-11-2015 |
| | | US 2017043528 A1 | 16-02-2017 |
| | | WO 2015166227 A1 | 05-11-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHOWDHURY, I.R.** ; **PEMBERTON, R.** ; **SUMMERSCALES, J.** Developments and Industrial Applications of Basalt Fibre Reinforced Composite Materials.. *J. Compos. Sci.*, 2022, vol. 6, 367, https://doi.orq/10.3390/ics6120367

- **CHOWDHURY, I.R.** ; **PEMBERTON, R.** ; **SUMMERSCALES, J.** Developments and Industrial Applications of Basalt Fibre Reinforced Composite Materials.. *J. Compos. Sci.*, 2022, vol. 6, 367, https://doi.org/10.3390/jcs6120367